# EUROPEAN PATENT SPECIFICATION

(11) **EP 0 442 513 B1**
(45) Date of publication and mention of the grant of the patent: **07.06.1995**
(21) Application number: 91102126.9
(22) Date of filing: 14.02.1991
(51) Int. Cl.: B64D 17/02

(54) **Paraglider**
Gleitschirme
Parapente

(30) Priority: 14.02.1990 JP 34888/90
(43) Date of publication of application: 21.08.1991
(73) Proprietor: KENBEC LTD., Shiso-gun, Hyogo Prefecture 671-25 (JP)
(72) Inventor: Murakami, Kenji c/o Kenbec Ltd., Shiso-gun, Hyogo Pref., 671-25 (JP)
(74) Representative: WILHELMS, KILIAN & PARTNER Patentanwälte

(56) References cited:
- WO-A-88/05746
- DE-A- 3 723 312
- DE-U- 8 910 481
- FR-A- 2 614 265
- US-A- 4 406 433

## Description

The invention relates to an airfoil wing canopy for a paraglider of the type mentioned in the preamble of claim 1. Such a canopy is known from the WO-A-8805746.

The canopy of a paraglider is made of a non-porous cloth and has air chambers in parallel separated by ribs with front air-intake openings. Air enters into each chamber through the front air-intake openings and inflate the canopy to create a cross section like an airplane wing and holds the paraglider to glide by inflation of the canopy airfoil by air pressure inside the chamber (ram air).

Like an airplane wing, the air flowing over both surfaces of the airfoil, exerts an upward force (lift force) and thus, the paraglider can glide in air. A paraglider of this type is already provided and in practical use.

As far as this paraglider keeps speed using the natural wind, it is able to glide.

A canopy that is made of non-porous cloth, is soft and flexible and can thus be made small by folding. Thus, it is convenient to carry and a simple flying apparatus.

The air entering the front air-intake openings, inflates the canopy with a sufficient pressure to maintain its shape.

For gliding paragliders at the present plastic reinforced materials are used to compulsory open the air-intake openings, because it is most important to maintain the shape of the paraglider airfoil in order to make the paraglider glide.

A construction of a paraglider using reinforced materials, however, involves the risk that the airfoil is folded down by the difference in weight and hardness between the plastic materials and the cloth.

In addition, normal paraglider without reinforced materials have the defect that the canopy airfoil crushes because it does not maintain it's shape due to the inside air pressure of the canopy chambers and cannot maintain the pressure of the flowing air outside the canopy under strong turblences and winds.

In addition, slowing down the forward speed of the paraglider, makes it difficult to maintain the ram pressure sufficiently to maintain the canopy airfoil inflated because the canopy inflation is kept by the forward moving force of the paraglider. This also causes the canopy to crash.

As stated above, irregular canopy shape makes the air-intake openings smaller and irregular. In case, ram air pressure is reduced so that the canopy airfoil shape brakes and the pilot falls into danger. In order to recover the canopy airfoil, it is necessary to up the air pressure inside the chambers by taking air from outside, by quick drop. The quick drop for this purpose results in a loss of altitude and sometimes the pilot has crash problems.

Furthermore, with the known canopy according to the preamble of claim 1 secondary chambers are formed by closing some of the cells which are formed by separating the body by ribs. Thus, primary and the secondary chambers are provided side by side in form from cells having the same shape being open or closed at the front side.

With such a construction first of all the whole front side of the canopy is not available for air-intake because at least some of the cells or chambers are closed at the front side. This is an disadvantage as regards the amount of air which can flow into the canopy and thus as regards the velocity of inflating it.

Furthermore, if the pressure drops in the open cells or primary chambers of the known canopy the secondary chambers or closed cells remain swollen but are not able to maintain the airfoil wing canopy shape which breaks down at least at the open cells if the pressure drops inside of the open cells.

It is therefore the object of the present invention to provide an airfoil wing canopy for a paraglider as mentioned in the preamble of the claim 1 with which it is avoided that the inflated airfoil wing shape is broken if the inflating pressure drops.

This object is obtained by the construction mentioned in the characterizing part of claim 1.

The secondary chambers are in particular disposed along at least one inner surface of the primary chamber.

By this construction according to the present invention, outside air flows into the first chambers of the canopy through the front air-intake openings and by air pressure inside the first chambers inflates the same. Ram air in the inflated first chambers flows into the secondary chambers at their open end resulting in making the secondary chambers inflated.

Once the secondary chambers are inflated they are kept inflated by means for avoiding a backflow of the air which are attached at the open end of the secondary chambers. The inflation of the secondary chambers effects a canopy reinforcement to keep the canopy airfoil shape even if the air pressure in the first chambers should drop.

A prefered embodiment of the present invention is shown in the associated drawings in which
Fig. 1 shows a paraglider as it is used,
Fig. 2 shows a cross section of a canopy airfoil, and
Fig. 3a and 3b show the secondary chambers.

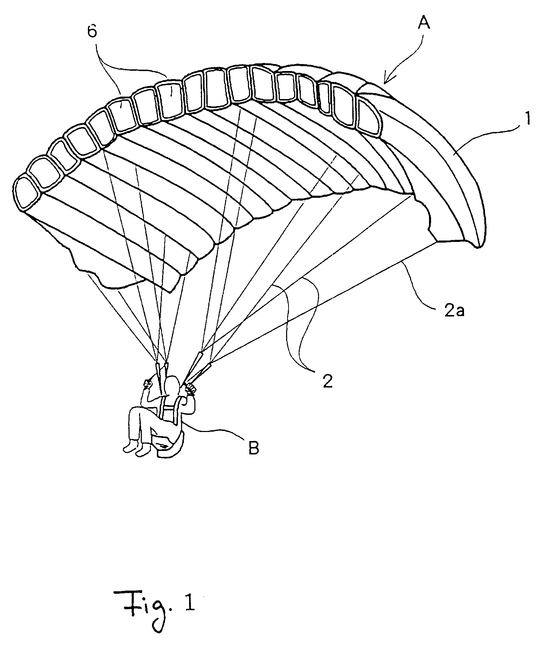

A paraglider mainly consists of a canopy 1 and number of suspension lines 2 to be fit with the canopy 1 (see Fig. 1).

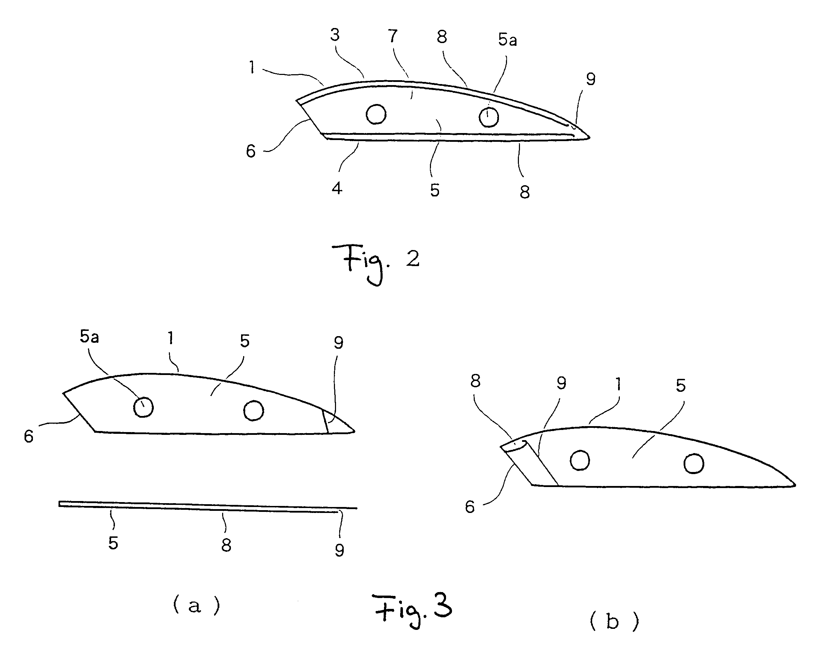

The canopy 1 is made of a non-porous cloth and the upper surface 3 and the lower surface 4 are held together by ribs 5 (Fig. 2).

The ribs 5 separate the canopy 1 into cells 7, each of which has an air-intake opening 6 at the front part. Air through the air-intake openings 6 enters into chambers to inflate the canopy with ram air pressure like an airplane wing. Holes 5a or cross elements in the ribs 5 allow a spanwise flow to equalize pressure and to help maintaining inflation of the canopy. The suspension lines 2 are ganged together at the front and rear side to the risers and the pilot B is hanged on by a harness. Among the lines 2 there are lines 2a which are used for steering purposes in order to control the paraglider A.

The construction mentioned above and shown in Fig. 1 is the known basic paraglider construction.

According to the present invention secondary chambers 8 are provided made by the same quality cloth of canopy as the first chambers of the canopy 1. The mouth or end 9 of the secondary chambers 8 opens to the inside of the first chambers 7.

With such a construction ram air in the first chambers 7 is forcedly moved under pressure into the secondary chambers 8 to inflate these chambers 8. The mouth 9 is provided with means which easily allow an air flow into the secondary chambers 8 but which prevent a backward flow.

Thus, independent chambers 7 and chambers 8 are provided which keep the airfoil shape.

As it is shown in Fig. 2, the secondary chambers 8 are provided along the whole inside of the upper surface 3 and the lower surface 4. In order to obtain a small weight, it can however also taken into consideration to provide secondary chambers 8 at the upper surface 3 or the lower surface 4 only. In order to put into practise the present invention, the secondary chambers 8 can have various shapes and can be provided at any places of the canopy 1.

Fig. 3a shows secondary chambers 8 on the ribs 5 which effect a reinforcement to even stronger support the airfoil shape.

Fig. 3b shows secondary chambers 8 in a tubular shape that is able to provide a reinforcement to spanwise support the canopy making the edge even stronger, when put on the parts of the air-intake opening 6 of the chamber 7.

Although not shown in the drawings, the secondary chambers 8 can be provided partially on the ribs 6 and on the upper surfaces 3 of the chambers 7 and/or lower surfaces 4 and can be connected with each other.

As explained above by the present invention the following effects can be achieved:
1.When the canopy is inflated air enters into the first chambers and at the same time into the secondary chambers. Therefore, the airfoil shape can be stronger maintained being supported by two chambers pressure.
2. Because the air in the secondary chambers cannot flow backwardly by the system for stopping the air backward flow which for example consists in a curtain valve at the open ends, the canopy airfoil cannot break even if the air pressure in the first chambers considerably changes. Thereby, it is possible to reduce danger and risks and postpone of the flight.
3. According to the canopy's construction, it is not necessary to assemble elements of different materials as for example plastic and so on. The whole canopy consists of the same quality soft cloth. There is thus no danger when folding the canopy due to the difference in weight and hardness of the materials. The safety of the paraglider is thus increased and paragliders are obtained having the normal paraglider's characteristics, namely light weight being soft and flexible and being handled easily when packing and at the same time being strong when gliding.

## Claims

1. An airfoil wing canopy for a paraglider comprising a body made from non-porous cloth and separated by ribs into a number of primary chambers each being open at the front side for forming air intake openings and being connected to closed secondary chambers by means allowing an air flow into the secondary chambers but preventing a backward flow, the secondary chambers receiving air from the primary chambers and being inflated thereby, characterized in that the secondary chambers (8) are disposed in each primary chamber (7) opening inside of the primary chamber (7) and are located at suitable parts thereof for selfreinforcing the canopy airfoil shape when inflated.

2. A canopy as claimed by claim 1, characterized in that the secondary chambers (8) are disposed along at least one inner surface of the primary chamber (7).

## Patentansprüche

1. Tragflügelschirm für einen Hängegleiter mit einem Körper aus einem nicht porösen Stoff, der durch Stege in eine Anzahl von primären Kammern aufgeteilt ist, von denen jede an der Vorderseite zur Bildung von Luftaufnahmeöffnungen offen ist und mit geschlossenen sekundären Kammer über Einrichtungen verbunden ist, die einen Luftstrom in die sekundären Kammern erlauben, aber einen Rückstrom verhindern, wobei die sekundären Kammern die Luft von den primären Kammern aufnehmen und dadurch aufgeblasen werden, dadurch gekennzeichnet, daß die sekundären Kammern (8) in jeder primären Kammer (7) so angeordnet sind, daß sie im Inneren der primären Kammer (7) münden, und an zur Selbstverstärkung der Tragflächenform des Schirmes im aufgeblasenen Zustand geeigneten Teilen der primären Kammer angeordnet sind.

2. Schirm nach Anspruch 1, dadurch gekennzeichnet, daß die sekundären Kammern (8) entlang wenigstens einer Innenfläche der primären Kammer (7) angeordnet sind.

## Revendications

1. Voilure d'aile sustentatrice destinée à un paraplaneur comprenant un corps réalisé à partir d'un tissu non poreux et divisé par des nervures en un certain nombre de chambres primaires, chacune de ces chambres étant ouverte au niveau du bord avant de manière à réaliser des ouvertures d'admission d'air et étant reliée à des chambres secondaires fermées de manière à admettre un flux d'air dans les chambres secondaires, mais en empêchant un reflux, les chambres secondaires recevant l'air depuis les chambres primaires et étant ainsi gonflées, caractérisée en ce que les chambres secondaires (8) sont placées à l'intérieur de chaque chambre primaire (7) en s'ouvrant à l'intérieur de la chambre primaire (7) et sont situées en des zones adaptées de celle-ci de manière à renforcer par elle-même la forme sustentatrice de la voilure lorsqu'elle est gonflée.

2. Voilure selon la revendication 1, caractérisée en ce que les chambres secondaires (8) sont placées le long d'au moins une surface interne de la chambre primaire (7).
